Europäisches Patentamt

European Patent Office

Office européen des brevets

(11) Publication number: 0 367 134
A1

# EUROPEAN PATENT APPLICATION

(21) Application number: 89119979.6

(51) Int. Cl.⁵: B60R 1/06

(22) Date of filing: 27.10.89

(30) Priority: 02.11.88 IT 2247688

(43) Date of publication of application:
09.05.90 Bulletin 90/19

(84) Designated Contracting States:
BE DE ES FR GB IT NL SE

(71) Applicant: Siano, Dante
Via Treviso 10
I-20093 Cologno Monzese(IT)

Applicant: Righi, Nardino
Via Maniago 2
I-20100 Milano(IT)

(72) Inventor: Siano, Dante
Via Treviso 10
I-20093 Cologno Monzese(IT)
Inventor: Righi, Nardino
Via Maniago 2
I-20100 Milano(IT)

(74) Representative: Marietti, Giuseppe
CENTRO DI CONSULENZA IN PROPRIETA'
INDUSTRIALE Viale Caldara, 38
I-20122 Milano(IT)

(54) Device to control the rotation of an external rear-view mirror.

(57) An external rear-view mirror for vehicles in which the gearing ratio of the means of rotating the body of said mirror with reference to the vehicle is so high as to make virtually impossible, turning said body manually incorporates at least one clutch into the gear train of the means of rotating said body. The clutch is adjusted to render the elements substantially united when said body is rotated mechanically, but allows the elements to reciprocally slide when said body is rotated manually.

Fig.1

# DEVICE TO CONTROL THE ROTATION OF AN EXTERNAL REAR-VIEW MIRROR.

The present invention concerns a device for the mechanical rotation of the body of external rear-view mirror for vehicles. In particular the device rotates both manually and by a motor said body and the entire mirror with respect to the vehicle to which it is fitted.

In such mirrors a motor fed by the battery of the vehicle rotates the body of said mirror forward and rearward with respect to the body of the vehicle between two resting positions and an intermediate working position.

It should be noted here that the term "body" in the following description refers both to the body and the mirror itself with its mechanism for orientating it with respect to the body.

Because of the reduced space available, the electrical motor for rotating the body is so small that the ratio of the reduction gearing necessarily is very high.

In such a mirror configuration rotating the body manually is practically impossible because of the very high gear ratio. This situation is contrary to the current legal requirements with respect to passive safety which require that the external rear-view mirror rotate on the mounting shaft on the application of a predetermined force, i.e. manual rotation must also be possible.

There remains the necessity for a device which allows the manual and mechanical rotation of the body of the external rear-view mirror for vehicles with respect to the vehicle itself, and that is easy and economical to produce.

The aim of the present invention is to overcome the aforementioned shortcomings and to produce a device for the rotation of the body and the entire external rear-view mirror which takes up little space and is simple to construct, economical and reliable.

In more detail, the present invention concerns a device for the motorized control of the rotation of the body of an external rear-view mirror for vehicles, through reduction gears characterized by the ratio of the reduction gear being so high as to render practically impossible the manual rotation of the output shaft of the same; and by at least one clutch being incorporated into the gear train controlling the rotation of the body, said clutch being adjusted to render the elements substantially united when said body is rotated mechanically, but allowing the elements to reciprocally slide when said body is rotated manually.

The present invention will now be described in greater detail with reference to the attached drawings which are of an illustrative, but non-limiting nature, wherein:

Fig.1 is a cutaway view of the device according to the present invention;

Fig.2 is a schematic diagram of the control circuit of the device according to the present invention.

Since, as has already been mentioned, the ratio of the reduction gear is so high as to render manual rotation of the mirror virtually impossible, the invention provides for at least one clutch between the reduction gear and the related pinion gearwheel or, alternatively, the crown gearwheel, in particular between the crown gearwheel and the supporting base of the mirror, or between the crown and the body, according to the layout of the components.

This clutch is adjusted so that the coefficient of friction is sufficiently large that the components are substantially united when the mirror is rotated by; the electric motor and sufficiently low to permit the friction components to slide over one another when the mirror is rotated manually.

Various layout of the clutch are possible. In a first case the clutch is fitted to the electric motor shaft and this also functions as the pivot for the mirror which is fixed to the shaft. The reduction gear must be fixed and the clutch is fitted between the reduction gear and the part of the shaft fixed to the mirror.

Alternatively, the geartrain contains a pinion and crown gearwheel; in such cases three arrangements are possible depending on whether the crown rotates or is fixed when the mirror is rotated by the electric motor.

If the crown wheel rotates, the electric motor must be fixed and housed externally to the body and the mirror, with a resulting increase in overall size. In this case the clutch is fitted to the electric motor output shaft (between the reduction gear and the pinion) or between the crown wheel and the body.

If the crown wheel is fixed when the mirror is rotated by the electric motor, the electric motor is housed in the body and rotates with said body. This is the preferred solution because of the previously stated problem of space; in this case the clutch is fitted between the crown wheel and the support base of the mirror.

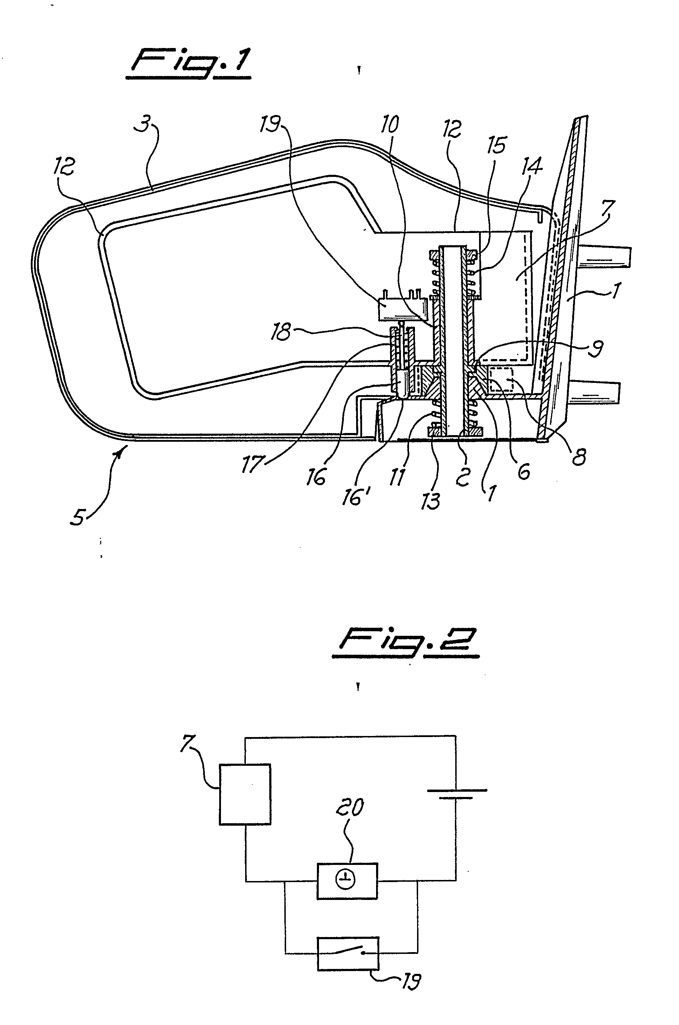

This preferred embodiment shown in Fig.1 will be referred to in the following description, without however limiting the protection to this embodiment alone.

As can be seen, the device according to the present invention consists of a base support 1, attachable to the vehicle so that it remains fixed in relation to the rotation of the body; said base 1 mounts a hollow pivot 2 which functions as a fulcrum, through which pass the electric cables to operate the electric motor and to control the rotation of the mirror. On the pivot rotates the body 3 fixed to the support structure 12 of the mirror itself (which is not shown), said group forming the mobile part 5 of the external rear-view mirror.

As can be seen from Fig.1, the crown wheel 6 is fitted to the base 1, and engages the pinion 8 of the reduction gear 7; the friction surfaces between the crown wheel and the base 1 are preferably cone frustum in shape to increase the contact area.

In the embodiment of Fig.1, in order to maintain strong contact between the crown wheel and the cone frustum part of the base 1, there is at least one protuberance 9 on the pivot 2 which bears on the crown wheel 6 which bears in its turn on the base 1. A compression spring 11 acts between a regulating nut 13 threaded onto the pivot 2, and the nearest face of the base 1. In this way the pivot 2 is forced axially downwards and the protuberance 9 bears the crown wheel 6 against the corresponding surface of the base 1. The friction force thus developed is sufficient to render the crown wheel 6 and the base 1 practically united when the mirror is rotated by the electric motor, while it is sufficienly reduced to allow the components to slide over one another when the mirror is rotated manually.

A support structure 12 of the mirror itself is fixed to the body 3. In the embodiment shown in Fig.1 said support presents a bush shaped part 10 which is integral with it. Said bush 10 engages the pivot 2 and a lateral protuberance of the same pivot with a low friction coefficient. Preferably, as shown in Fig.1, said bush part of the support 12 bears on the same protuberance 9 which, due to the spring 11, maintains the crown wheel 6 in close contact with the base 1.

Above the bush 10 there is a second spring 14 which acts between a regulating nut 15, threaded to the pivot 2, and the free end of said bush 10, in such a way as to thrust said bush and thus all the mobile part 5 against said protuberance.

Said second spring 14 is not as strong as the spring 11 in as much as its function is to maintain the support 12 united with the pivot 2 and not develop friction between the bush 10 and the related protuberance of the pivot 2.

When the electric motor is activated the pinion 8 rotates and, as because of the friction developed the crown wheel 6 is substantially united to the base 1 and remains fixed, the body 3 and all the mobile parts of the mirror is rotated round the pivot 2.

When, on the other hand, the electric motor 7 is stopped, the pinion 8 cannot be rotated manually due to the high gear ratio, and remains substantially united to the crown wheel 6. In this case, when the body is rotated manually the crown wheel 6 rotates with it round the pivot 2; the force applied to effect this rotation is a function of the friction between the crown wheel 6 and the base 1, and the clutch can therefore be adjusted by the regulating nut 13.

In the embodiment shown there are two means of controlling the position of the body and the mobile part 5. Such means consist generally of a plurality of niches or depressions in prefixed positions along a circumference arc, and swithing means mobile along said circumference arc and connected to the control circuit of the electric motor 7.

In the preferred embodiment said depressions are arranged on the base 1 along said circumference arc and said switching means consist of an elongated body 16 housed in the mobile part 5 and moving with said part. The lower part of said elongated body 16 presents a substantially hemispherical shape 16′, and the body itself is forced downwards by an elastic means 17 so as to continually engage the surface of the base 1. Above the elongated body 16 there is an actuating rod 18 which acts on a microswitch 19 connected to the control circuit of the electric motor 7.

Rotating the body, the elongated body 16 follows a path on which there are the depressions; when the body 16 meets a depression, it is forced downwards into the depression by the elastic means 17, lowering the actuating rod 18 and tripping the microswitch 19. Continuing the rotation, the body 16 and the actuating rod 18 are raised again and the microswitch 19 operates again.

The function of the circuit and the function of the microswitch 19 will now be explained with reference to Fig. 2.

The microswitch 19 is in parallel with a two-way commutator 20 consisting of a timer and a polarity inverter. In the resting position both the time switch and the microswitch 19 are open. Activating the commutator 20 the circuit is closed and activates the electric motor 7 which rotates the mobile group 5 for a pre-set time, regulated by the timer. During the rotation the body 16 and the actuating rod 18 close the microswitch 19 and maintain it closed.

At this time both the commutator 20 and the microswitch 19 are closed. After a certain prefixed time has elapsed, the commutator 20 switches to the open condition but the electric motor 7 continues to operate since the microswitch 19 is closed, and will continue to operate until the body 16 meets the next depression on its path.

At that point the microswitch 19 is opened, the circuit is interrupted and the electric motor 7 is stopped.

To prevent the circuit being closed and the electric motor 7 being activated by manual rotation of the mirror, there are provided known safety devices which prevent the motor being activated except by the commutator 20.

## Claims

1. Device for the motorized control of the rotation of the body of an external rear-view mirror for vehicles through reduction gears, characterized by the ratio of the reduction gear being so high as to render practically impossible the manual rotation of the output shaft of the same; and by at least one clutch being incorporated into the gear train controlling the rotation of the body, said clutch being adjusted to render the elements substantially united when said body is rotated mechanically, but allowing the elements to reciprocally slide when said body is rotated manually.

2. Device according to Claim 1 characterized by the said clutch being provided onto the output shaft of the reduction gears of said electric motor.

3. Device according to Claim 1 in which said gear train comprises of a pinion and crown wheel, characterized by said electric motor and reduction gears being fixed to the support base of the body of the mirror, the crown wheel being fitted to the mirror body, and said clutch being provided between the mirror body and the crown wheel.

4. Device according to Claim 1 in which said gear train consists of a pinion and crown wheel, characterized by said electric motor and reduction gears being fixed to the mirror body, and moving with it; the crown wheel being fitted to the support base, and the clutch being provided between the crown wheel and the support base.

5. Device according to Claim 4 characterized by the friction surfaces between the crown wheel and the support base being shaped as complementary cone frustums.

6. Device according to Claims 4 and 5, characterized by the crown wheel being fitted coaxially to a pivot which functions as a fulcrum housed in the support base.

7. Device according to Claim 6 characterized by the crown wheel being braced between the support base and at least one protruberance on the pivot, and by a compression spring acting between a regulating nut fitted to said pivot and the support base, forcing the crown wheel against the support base, by means of said protuberance.

8. Device according to one of the Claims 4 to 7, characterized by said mirror body bearing on said pivot through a bush with low friction coefficient which bears against a protuberance of said pivot.

9. Device according to Claim 8 characterized by a compression spring acting between a regulating nut fitted to the pivot and the extremity of said bush, to maintain said body pressed against said lateral protuberance.

10. Device according to any of the preceeding Claims characterized by having means of controlling the rotation and positioning of the body, said means comprising a plurality of niches or recesses arranged along a fixed path and switching means mobile along said path and insertable in said niches to act on an electrical circuit to control the operation of the electric motor.

11. Device according to Claim 10, characterized by the niches being arranged on said fixed support base, and said switching means consisting of an elongated body with a hemispherical extremity, moving with the mobile part, and being forced axially against said support base; said elongated body being integral with an actuating rod axially mobile with said elongated body to switch on and off a microswitch connected to said circuit.

12. Device according to Claim 11, characterized by said microswitch being connected in parallel with a two-way commutator which functions as a timer and polarity inverter.

**_Fig.1_**

**_Fig.2_**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 146 888 (ICHIKOH) * Figures 18-23; abstract; page 3, lines 1-12; page 15, line 15 - page 18, line 7 * | 1,2,4 | B 60 R 1/06 |
| A | | 5-7 | |
| X | PATENT ABSTRACTS OF JAPAN, vol. 9, no. 307 (M-435)[2030], 4th December 1985; & JP-A-60 143 154 (MURAKAMI KAIMEIDOU K.K.) 29-07-1985 * Whole document * | 1-3 | |
| X | EP-A-0 166 378 (MURAKAMI KAMEIDON) * Figures 1-9,12-17b; abstract; page 11, line 2 - page 12, line 18; page 17, line 9 - page 20, line 11 * | 1,2,4 | |
| A | | 10 | |
| X | EP-A-0 182 260 (ICHIKOH) * Figures 1-9; abstract; page 3, line 10 - page 5, line 15; page 6, line 20 - page 10, line 9; page 12, lines 15-19; page 14, line 11; page 16, line 3 - page 19, line 15 * | 1,2,4 | TECHNICAL FIELDS SEARCHED (Int. Cl.5) B 60 R |
| A | | 10 | |
| A | GB-A-2 155 876 * Figures 1-5; abstract; page 1, lines 36-120; page 2, lines 21-129; page 4, lines 26-89 * -/- | 1,10,11 | |

The present search report has been drawn up for all claims

| Place of search | Date of completion of the search | Examiner |
|---|---|---|
| THE HAGUE | 07-02-1990 | D'SYLVA C.H.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

European Patent Office

**EUROPEAN SEARCH REPORT**

Application Number

EP 89 11 9979

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | PATENT ABSTRACTS OF JAPAN, vol. 12, no. 392 (M-755)[3239], 19th October 1988; & JP-A-63 141 848 (MURAKAMI KAIMEIDOU K.K.) 14-06-1988 * Whole document * ----- | 12 | |
| | | | **TECHNICAL FIELDS SEARCHED (Int. Cl.5)** |

The present search report has been drawn up for all claims

| Place of search | Date of completion of the search | Examiner |
|---|---|---|
| THE HAGUE | 07-02-1990 | D'SYLVA C.H.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
............................................................................
& : member of the same patent family, corresponding document

EPO FORM 1503 03.82 (P0401)